Europäisches Patentamt

European Patent Office

Office européen des brevets

(11) Publication number: **0 139 035**
**A1**

## EUROPEAN PATENT APPLICATION

(21) Application number: 83110538.2

(22) Date of filing: 21.10.83

(51) Int. Cl.⁴: **B 01 J 47/10**

(43) Date of publication of application:
02.05.85 Bulletin 85/18

(84) Designated Contracting States:
AT BE CH DE FR GB IT LI NL SE

(71) Applicant: THE DOW CHEMICAL COMPANY
Dow Center 2030 Abbott Road Post Office Box 1967
Midland Michigan 48640(US)

(72) Inventor: Phillips, Gary C.
103 Arrow Wood Lake Jackson
Brazoria Texas 77566(US)

(74) Representative: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel Postfach
860820
D-8000 München 86(DE)

(54) Traveling bed ion exchange contact apparatus and process for employing same.

(57) A method and apparatus for contacting a fluid with an ion exchange resin which comprises flowing the contacting fluid through a moving bed of the ion exchange resin in a direction essentially perpendicular to the direction of flow of said ion exchange resin bed (19).

FIG. I

EP 0 139 035 A1

TRAVELING BED ION EXCHANGE CONTACT
APPARATUS AND PROCESS EMPLOYING SAME


The present invention relates to a traveling bed ion exchange or ion concentrating apparatus and to a process employing such an apparatus.

Ion exchange or ion concentrating processes are well known in the art and generally employ a fixed bed of an ion exchange or ion concentrating resin which is maintained in a contact or a flow through apparatus or column such that the contacting liquid passes through the apparatus in parallel countercurrent flow to the ion exchange or concentrating resin beads.

Each of these processes have one or more disadvantages such as

(1) high energy requirements (pressure drop due to flow),

(2) plugging of the ion exchange bed by particulate material such as, for example, dirt, fine resin and the like,

(3) necessity of designing fixed bed units with 50-100% empty volume above the resin for backwashing purposes to remove particulate material from the bed,

0139035

(4)  frequent necessity to perform an ion exchange operation where the flow rates of the different fluids are greatly different causing design and distribution problems.

One or more of these disadvantages have now been overcome by the apparatus and process of the present invention wherein a bed of an ion exchange or ion concentrating resin travels along a plane and the fluid stream to be contacted passes up through the traveling resin bed in a non-parallel, substantially perpendicular flow (i.e., within about 15° of perpendicular) with respect to the planar flow of the resin bed.

For purposes of brevity, such ion exchange resins and/or material shall be referred to hereinafter as ion exchange resins regardless of what method of exchange, complexing, coordination, absorption, adsorption and/or removal and the like actually occurs.

Processes for concentrating or removing ions from fluids are well known and usually consist of

(1)  a resin loading step or stage and

(2)  a resin regeneration step or stage. Each of the steps or stages can be performed in one process unit or in separate units.

Representative of such known processes are described in U.S. Patents 2,671,714; 2,772,143; 2,814,399; 2,897,051 and 3,056,651.

17,888F-F                    -2-

The present invention is particularly directed to an improvement in such a process and apparatus in that the contacting fluid is passed through an essentially non-filtering traveling bed of an ion exchange or ion concentrating resin in a direction which is substantially perpendicular to the flow of the traveling resin bed. By substantially perpendicular is meant that the angle between the flow of the contacting fluid through the traveling ion exchange resin bed does not exceed about 15° to either side of a line perpendicular to the plane of flow of the traveling ion exchange resin bed.

Figure 1 is a cross-sectional view along a longitudinal axis of a contactor apparatus containing a traveling bed ion exchange resin.

Figure 2 is a cross-sectional end view of the contactor apparatus.

Figure 3 is a cross-sectional end view of a contactor apparatus containing a traveling bed ion exchange resin divided by a plurality of baffles.

Figure 4 is a top view of the apparatus of Figure 3 showing the passageways formed by a plurality of the baffles.

Figure 5 is a diagramatic view of a system employing several ion exchange contactors connected in a series relationship.

Figure 6 is a cross sectional view of a distributing means.

Figure 7 is a perspective view of another distributor means.

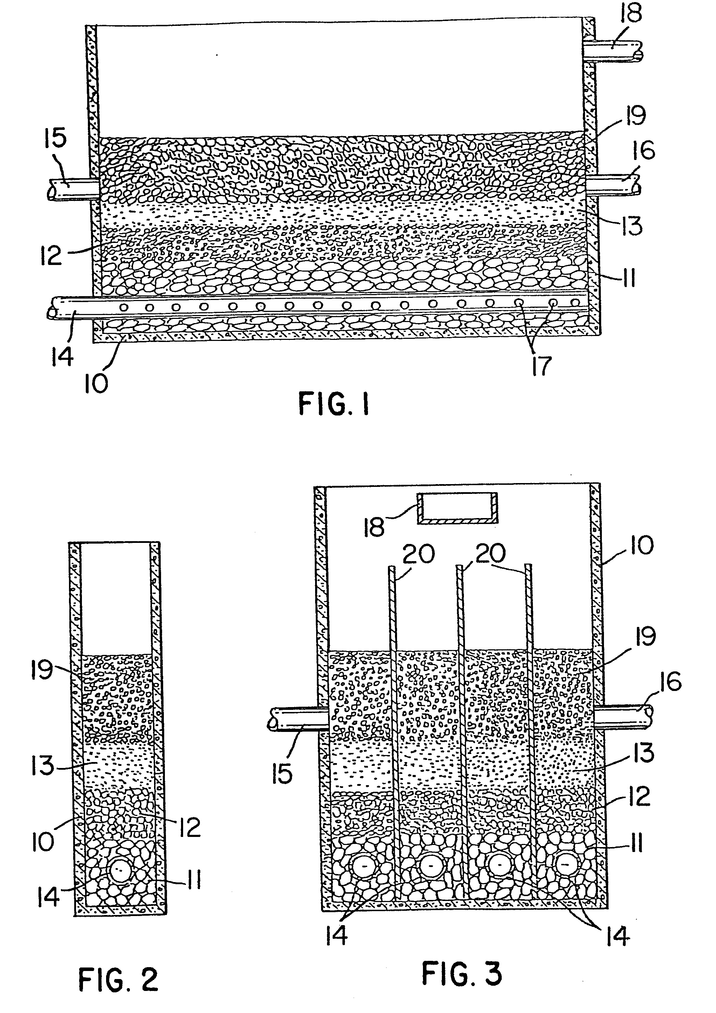

With reference to Figure 1, the traveling bed ion exchange resin apparatus of the invention generally comprises a housing or shell 10, a graded bed which functions as a fluid distributor and which contains successive layers of a coarse gravel 11, a fine gravel 12, and sand 13. An inlet conduit 14, having perforations 17 extend near the bottom of the housing for dispersing a contacting fluid throughout the length of the traveling ion exchange resin bed. The housing is also provided with an ion exchange resin inlet 15 and outlet 16, and a contacting fluid outlet 18. The housing 10 also contains a layer of the ion exchange resin 19 above the layer of sand 13.

Figure 2 is a cross-sectional end view of the apparatus illustrated in Figure 1 showing the housing 10, the graded bed of the layers of coarse gravel 11; fine gravel 12, and sand 13. Also shown in the end view of Figure 2 is the inlet conduit 14 for the contacting fluid and ion exchange resin 19.

Figure 3 is a cross-sectional end view of a traveling bed ion exchange resin apparatus containing one or more baffles to form a flow path for the resin of greater length in a relatively more compact area. Instead of a single fluid inlet conduit 14 as shown in the apparatus of Figures 1 and 2, each of the bed sections formed by the subdividing baffles is provided with a separate fluid inlet conduit 14. A single ion exchange resin inlet 15 and outlet 16 and a single contacting fluid outlet 18 is provided in the housing.

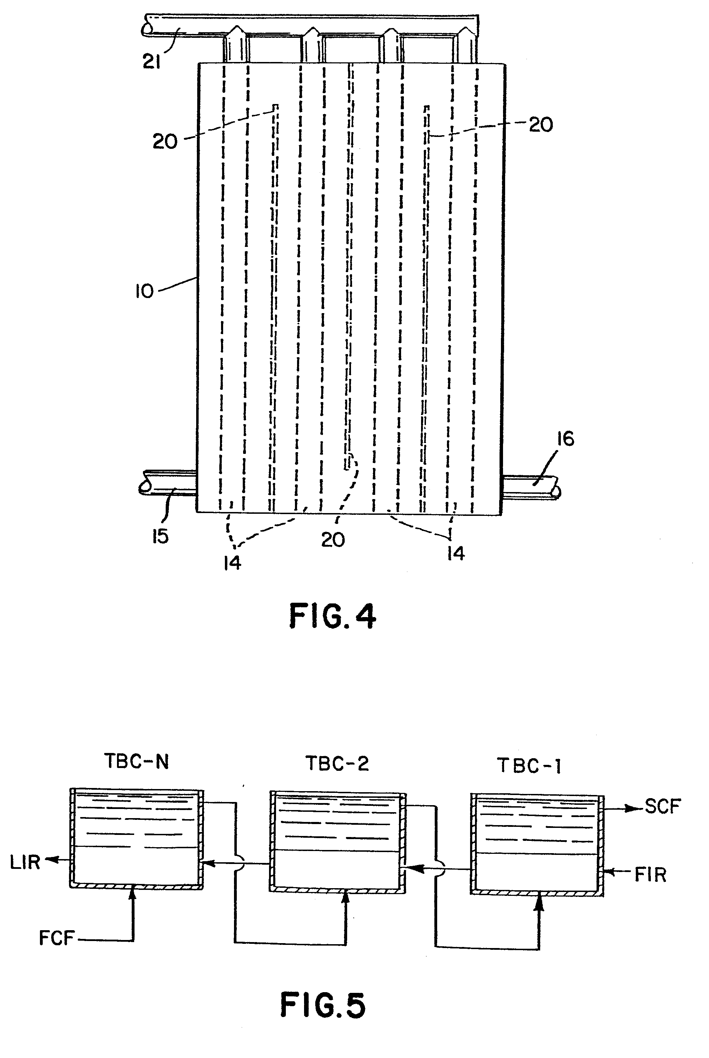

Figure 4 is a top view of the apparatus of Figure 3 showing the interleafing baffles and fluid inlet conduit in the housing 10 and the single ion exchange resin inlet 15 and outlet 16.

In the apparatus illustrated in Figures 3 and 4, the baffles 20, define compartments in the housing 10 which are open at one end and which contain the traveling ion exchange resin bed such that the flow is lengthwise from one compartment to the other. Within each compartment, the traveling bed of ion exchange resin is contacted with fresh liquid from inlet conduits 14 which are connected to a common header 21.

In some instances, it may be desirable to employ counter-current staging wherein the contacting liquid overflow from the last resin stage is collected and employed as the feed for a preceeding stage. Such could be employed to achieve a higher overall efficiency and one such means for accomplishing this is illustrated in Figure 5 in which a plurality of traveling bed ion exchange resin contactors such as are illustrated in Figures 1-4 are employed. The individual contractors are designated as TBC-1, TBC-2, TBC-N and are connected in series employing counter-current flow of the contacting fluid with respect to the traveling ion exchange resin bed in that the fresh contacting fluid is fed to the traveling bed ion exchange resin contactor which is last in the series with respect to the feed of fresh ion exchange resin contactor etc. Fresh ion exchange resin, designated FIR, is fed to the first traveling bed ion exchange resin contactor TBC-1 and subsequently into the subsequent contactors TBC-2 through TBC-N. The Spent Contacting Fluid, SCF, is discharged from the contactor which is first in the series TBC-1. Likewise, the loaded ion exchange resin, LIR, is discharged from the contactor which is last in the series, TBC-N.

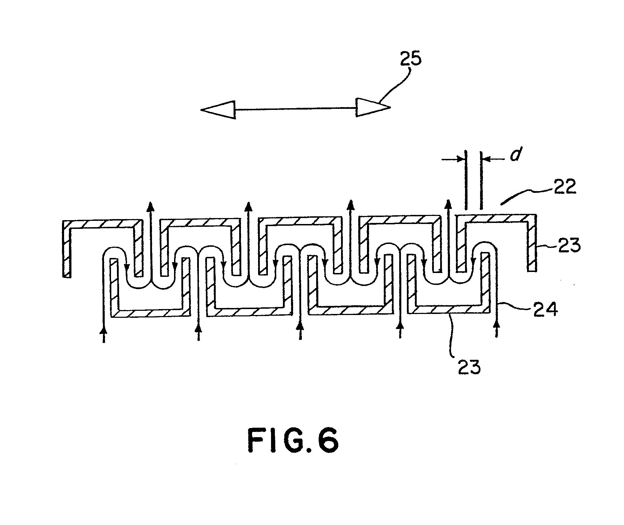

Figure 6 is a cross-sectional view of an alternate means for distributing the contacting fluid. This distributor would replace the graded bed distributing means illustrated in Figures 1, 2 and 3. As can readily be seen in Figure 6, this distributor 22, is constructed of a plurality of channel members 23 which are maintained, by a means not shown, in a spaced apart relationship. The treating fluid after entering the contactor apparatus via, preferably, a perforated conduit, not shown, passes through the distributor 22, as illustrated by the arrows 24. The space "d" in each instance being adjustable, by means not illustrated, so as to control flow and pressure drop through the distributor 22. The distributor 6 is arranged in an ion exchange resin contactor such that the ion exchange resin would preferably travel in a direction perpendicular to the length of the channels 23, as shown by the large two headed arrow 25.

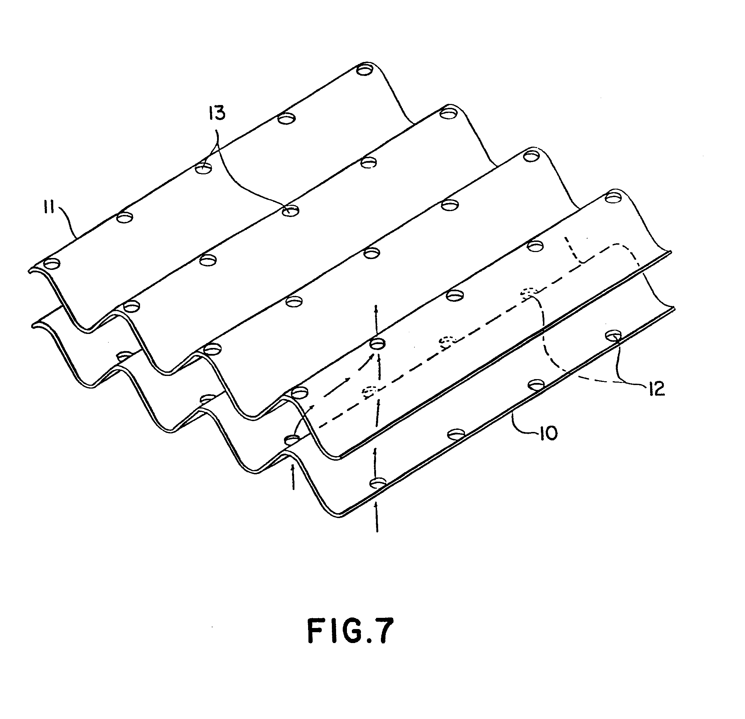

Figure 7 is a sectional view of another distributor which is composed of at least two spaced apart corrugated sheets of material, 10 and 11, each sheet being provided with a multiplicity of holes (perforations) 12 and 13 respectively, said sheets being aligned with respect to the holes (perforations) in each sheet in a manner to produce a tortuous path for the liquid flowing therethrough, so as to prevent linear flow of liquid through adjacent sheets.

17,888F-F

If desired the distributor can be constructed of 3, 4 or more perforated sheets. The material of construction of the sheets is not critical so long as it is essentially non-reactive or non-corrosive when in contact with the treating components or the components being treated.

In the contactors of the present invention, the graded bed distributor and/or support can be prepared from materials other than gravel and sand so long as the material is inert to the ion exchange resin and the contacting liquid. Suitable materials include ceramic or plastic tower packing materials such as Berl saddles, Raschig and Lessing rings, and the like. The purpose of the graded bed or other distributor is to uniformly distribute the incoming contacting fluid and to create a support upon which the ion exchange resin can move. The graded bed can be employed in combination with other distributing means and also a single grade of particulate matter can be employed in combination with other distributing means.

Other methods for uniformly distributing the contacting fluid over the area of the traveling ion exchange resin bed are disclosed in Chemical Engineers' Handbook, Fifth Edition, McGraw-Hill, 1973, pp. 5-47 to pp. 5-55, including, as distributors, perforated pipes, tube banks, and as distributor and/or support, perforated plates and screens, as well as combinations thereof and the like.

Irrespective of the particular distribution means, it is so constructed that during operation it does not substantially filter out any suspended solid filterable material which may be contained in the liquid being treated. Accordingly, the process and apparatus of the present invention is particularly useful when the contacting liquid contains suspended matter having a particle size of ≦ about 0.01 inch (0.0254 cm.), particularly ≦ about 0.008 inch (0.02032 cm.).

The process and apparatus of the present invention is suitable for any ion exchange or ion concentrating process either anionic or cationic or neutral such as for example, water softening, partial demineralizing, uranium recovery from ores, recovery of copper and other soluble metals from water, sugar purification, brine purification, acid recovery, recovery of $MgCl_2$ from seawater, and the like.

The ion exchange resins can be either anionic or cationic depending upon the ion desired to be removed from the contacting fluid. In addition to the traditional ion exchange resins wherein an ion from the ion exchange resin is replaced with an ion from the liquid being treated, other particulate resins and substances may be employed in the process and apparatus herein described such as, for example complexing, zeolites, chelating, sequestering, coordination, absorption, and/or adsorption materials which can be either anionic, cationic or neutral and which remove ions or molecules without replacement of the ions.

In those instances where it is desired to increase the quantity of fluid being treated but the velocity is such that the height of the taveling resin bed is at a maximum with respect to the dimensions of the contactor apparatus, the weight of the ion exchange resin can be increased according to the procedure described in copending application serial no. 307,829 filed October 2, 1981.

The following examples are illustrative of the invention but are not to be construed as to limiting the scope thereof in any manner.

EXAMPLE 1

An apparatus similar to that of Figures 1 and 2 was employed in which the housing had a dimension of approximately 2' x 16' x 4' (0.61 m x 4.88 m x 1.22 m). The housing contained a graded bed of 6 inches (15.24 cm) of coarse gravel, 3 inches (7.62 cm) of fine gravel and 3 inches (7.62 cm) of sand. Seawater was passed through a perforated 3-inch (7.62 cm) O.D. pipe at a rate of 100 gallons per minute (6.309 l/s). Through the resin inlet was fed a mixture of 60 volume percent DOWEX 50-X8 (50-100 mesh) ion exchange resin in a feed liquor of river water and ion exchange resin containing 0.15 meq.*/ml calcium ions, 1.7 meq./ml sodium ions and 0.1 meq./ml magnesium ions.

The seawater containing 75% salinity and 950 ppm** magnesium ions and was passed up through the graded bed and through the traveling bed of ion exchange resin in a direction essentially perpendicular to the flow of the ion exchange resin resulting in an ion exchange fluidized bed height of about 20 inches (50.8 cm). The contacted seawater was removed from the

---

*milliequivalents
**parts per million apparatus through an outlet which was positioned at a distance of approximately 2 feet (0.61 m) above the top of the traveling ion exchange bed. The seawater containing about 500 ppm magnesium ions was then removed from the overflow. The average resin velocity was about 0.8 ft/min (0.004 m/s) and the average seawater velocity was about 0.6 ft/min (0.003 m/s). The volume ratio of seawater to ion exchange resin was about 15:1. The ion exchange resin was removed from the opposite end of its feed inlet and was at a concentration of about 60 percent by volume in seawater-river water and contained 0.77 meq. of $Mg^{++}$/ml of resin. The ion exchange resin was then separated from the seawater-river water in a settling tank and regenerated with NaCl. The regeneration process employing NaCl to strip $MgCl_2$ from the loaded resin can be performed by known methods so as to produce a $MgCl_2$ solution in water. Such a $MgCl_2$ solution can be partially dehydrated and fed to an electrolytic magnesium cell for the production and recovery of magnesium metal and chlorine. The spent seawater was then discharged as a waste stream. Such a stream can be employed to carry the ion exchange resin instead of the river water employed above.

EXAMPLE 2

A 2 ft. (0.61 m) wide x 125 ft. (38.1 m) long traveling bed ion exchange contactor employing a 12 inch (30.48 cm) settled resin depth of DOWEX 50, 50-100 mesh ion exchange resin was employed to treat a river water stream containing a hardness of 200 ppm as $CaCO_3$ at a rate of 850 gpms. The thus treated water had a hardness as $CaCO_3$ of only 10 ppm.

EXAMPLE 3

### (A)  Present Invention

Data were collected on a 2 ft. (0.61 m) wide by 125 ft. (38.1 m) long traveling bed contactor using an 8 inch (20.32 cm) settled depth of DOWEX 50, 50-100 mesh ion exchange resin having an equilibrium loading value of 0.82 milliequivalents (meq.) of $Mg^{++}$ per ml. After passing 16 bed volumes* of 75% salinity sea water through the contactor, the resin had a loading of 0.74 meq. $Mg^{++}$/ml which was an efficiency of 90%.

### (B)  Comparative Experiment

A single stage hydroclone resin-seawater contactor employing essentially the same ion exchange resin was operated and required 30 bed volumes* of 75% salinity seawater to achieve the same resin loading.

The above clearly demonstrates the improved efficiency of the traveling bed ion exchange contactor and process employing same over a single stage ion exchange contactor not of the traveling bed type in that less seawater need be contacted to achieve the same resin loading value when employing the contactor and process of the present invention.

EXAMPLE 4

A traveling bed ion exchange apparatus was constructed of 1/4" (0.635 cm) plexiglass panels. The inside length and width were 18 inches (45.72 cm) and 6 inches (15.24 cm), respectively. The height was 15

---

* Bed volume is a dimensionless measure of the volume of the contacting fluid based on the settled volume of the resin ($V_B = \dfrac{V \text{ liquid}}{V \text{ resin}}$).

inches (38.1 cm). Attached to the front wall and running parallel to, and three inches (7.62 cm) from each side wall, was an internal path separation wall 8 inches (20.32 cm) high. It extended only 15 inches (38.1 cm) down the length of the bed. This left a 3 inch (7.62 cm) space in which the traveling resin could turn 180° and move toward the front wall.

A 5 inch (12.7 cm) high weir wall was attached perpendicularly to, and running between, the path separation wall and the right wall. The weir wall was 3-1/4" (8.255 cm) from the front wall blocking the right path of the bed. This positioning created a 3-1/4" x 3" (8.255 cm x 7.62 cm) resin collector, at the end of the traveling bed path.

An effluent trough was attached to the left wall and was supported by the front and back walls of the traveling bed. The trough was two inches (5.08 cm) wide and one inch (2.54 cm) deep. It extended through the front wall for a distance of eleven inches (27.94 cm). There were three one-eighth inch (0.3175 cm) holes drilled in the center of the trough at four, eight, and twelve inches (10.16, 20.32 and 30.48 cm) from the back wall. A drip lip extended downward, at the front end of the trough, for one and one quarter inches (3.175 cm).

The feed input apparatus consisted of a 3/8" (0.9525 cm) stainless steel tubes blocked off at the back end. In each tube there were thirty-four three--thirty seconds inch (0.238125 cm) holes drilled one inch (2.54 cm) apart. The holes were in two columns, 90° degrees apart and one column began and ended one-half inch (1.27 cm) ahead of the other. The tubes extended 17 inches (43.18 cm) into the bed from the front wall and were positioned one inch (2.54 cm) above the bottom. The tubes were connected by elbows and T's outside the front wall of the traveling bed so that feed coming in would flow into the bed in even distribution throughout the length of the bed.

A one-half inch (1.27 cm) plastic tube connected the stainless steel flow distributors to a pump adjusted by a ball valve to flow at three gallons per minute per square foot (2.04 liters per second per square meter). From the pump to the feed reservoir, there ran another one-half inch (1.27 cm) tube. The feed reservoir consisted of a plastic fifty-five gallon (208 l) drum with two hundred liters of feed.

In the center of the bottom of the resin collector (defined by the weir wall, the front wall, the right wall, and the path separation wall) there was a hole drilled and threaded to accommodate a three-eights inch (0.9525 cm) tubing elbow. The elbow was screwed into the bottom panel and attached on the outside to a one-half inch (1.27 cm) valve. From the ball valve there extended a one-half inch (1.27 cm) I.D. black rubber hose, it attached to a Gorman-Rupp Model 12500-13 vibrating pump. Another one-half inch (1.27 cm) hose extended from the pump discharge to a bucket. The resin collector, tubing elbow, valve, hose, pump, and bucket made up the resin removal system for the traveling bed.

The resin input system consisted of a six and one-half inch, (16.51 cm) funnel with a three inch

17,888F-F                          -13-

(7.62 cm) extention of rubber hose on the bottom. It was positioned so that resin would be fed into the front end of the bed in the left path and two inches (5.08 cm) from the front wall. Before the experiment was run, four and one-half inches (11.43 cm) of a cleaned coarse sand, ranging in particle size from 8 to 50 mesh U.S. Standard, was placed in the bed as an additional flow distributor.

The Feed

The feed for the traveling bed experiment was made up to be ~30 ppm $Cu^{++}$. To make 200 liters of feed, 23.6 g $CuSO_4 \cdot 5H_2O$ was added to 200 liters of DI $H_2O$. In addition, 2.85 g $FeCl_2 \cdot 4H_2O$ was added to the feed to give an iron content of ~4 ppm $Fe^{++}$.

The Resin

A chelating picolylamine resin #XFS-43084 available from The Dow Chemical Company was used for this experiment. Total quantity used was ~1200 cc resin.

The Experiment

The feed solution of ~32 ppm $Cu^{++}$ was upflowed into the traveling bed at 3 gpm/ft². Temperature of feed = 31°C, pH of feed = 2.75. The feed was allowed to enter the system until it overflowed through the effluent trough. At that time, a stop watch was started. Resin was added to the system at a rate of 100 cc resin per minute. At the end of each minute, a 20 cc plastic syringe with a rubber tube attached was extended into the bed at the center of the turnaround point. Two samples of effluent were drawn about one inch (2.54 cm) above the resin and/or sand. A total of seventeen samples were taken in this manner. A feed sample was also taken from the feed reservoir and effluent samples (3) from the effluent trough were taken at 5, 11, and 17 minutes intervals into the run.

The resin put into the system flowed down the left path of the bed to the back wall, turned around the path separation wall, and moved back to the front of the bed. It moved to the weir wall, and as excess resin was added through the funnel, resin at the weir wall was pushed into the resin collector and pumped into a bucket. At the end of the sampling of Sample #17, the feed pump was turned off.

The Results

The samples from this experiment were analyzed on a Perkin Elmer Model 2380 atomic absorption spectrometer. The results were as follows:

**0139035**

| Sample | Bed Volume Effluent | ppm Cu$^{++}$ |
|--------|--------------------|----------------|
| Feed | 0 | 32 |
| 1 | 14.1 | 20 |
| 2 | 28.14 | 19 |
| 3 | 42.3 | 18.7 |
| 4 | 56.3 | 18 |
| 5 | 70.5 | 18 |
| 6 | 84.6 | 18.5 |
| 7 | 98.7 | 18 |
| 8 | 112.8 | 17.8 |
| 9 | 126.9 | 18 |
| 10 | 141.1 | 18.6 |
| 11 | 155.2 | 19.6 |
| 12 | 169.3 | 19 |
| 13 | 183.4 | 18.5 |
| 14 | 197.5 | 18.7 |
| 15 | 211.6 | 20 |
| 16 | 225.7 | 21.5 |
| 17 | 240.1 | 21.5 |

It should be noted that Sample 1 was taken before the resin reached the turn-around where the sampling was done. Therefore, it is safe to say that the sand itself had some attraction for the copper ion. The numbers also show that when the resin had passed the sampling point (at between Sample 2 and Sample 3) a drop of ~2 ppm was observed.

## CLAIMS

1. An ion exchange resin contactor comprising a horizontally disposed shell; a horizontally disposed liquid distributor means positioned in the lower extreme of said shell; a bed of ion exchange resin supported on the distributor means; means for continuously feeding to the shell and means for continuously removing from the sehll ion exchange resin from the resin bed such that said resin bed travels horizontally along said distributor means in the shell; means for conducting to and for passing a contacting liquid to be treated upwardly through said distributor means and upwardly through said resin bed in a direction essentially perpendicular to the plane of flow of the resin bed and at a velocity sufficient to maintain said resin bed in an essentially non-filtering fluidized state; and a means for removing said contacting liquid from the shell after contact with said resin bed.

2. The contactor of Claim 1, wherein said ion exchange resin are resin beads of a size sufficient to be fluidized by the passage of the treating fluid therethrough to the extent that suspended filterable material having a particle size $\leq$ about 0.01 inch will not be substantially filtered from said fluid, and wherein said conducting means is of a size sufficient to carry the treating fluid at a velocity such as to maintain the filterable material suspended in the treating liquid while passing through the distributor means and bed of ion exchange resin beads.

3. The contactor of Claim 1 or 2 wherein said distributor means is selected from the group consisting of (1) a graded bed(s); (2) a perforated pipe(s); (3) a tube bank(s); (4) a perforated plate(s); (5) a screen(s); (6) a tower packing; (7) a channel member(s); (8) a perforated corrugated sheet(s) or a combination thereof.

4. The contactor of Claim 3 wherein said distributor means is a graded bed comprising at least one layer of a particulate material and a layer of sand, and wherein said resin bed travels over the layer cf sand.

5. The contactor of Claim 3 wherein said liquid distributor means is constructed of a plurality of adjacent channel members associated with a plurality of opposing channel members, said channel members being arranged in a manner which causes the liquid to flow within the confines of said channel members so as to provide a substantially uniform upward flow of liquid through said bed of ion exchange resin.

6. The contactor of Claim 3 wherein said liquid distributor means is constructed of a plurality of corrugated sheets which are provided with perforations and which are aligned such that the flow of liquid therethrough is in a tortuous manner thereby providing a substantially uniform flow of liquid upwardly through said bed of ion exchange resin.

7. The contactor of any one of the preceding Claims, including one or more baffles in said shell extending along the length of travel of said ion exchange resin in a manner so that the precontacted fluidized ion exchange resin is separately contacted with a fresh contacting liquid.

8. A process for concentrating ions or removing ions from a liquid by contacting said liquid with an ion exchange resin, characterized by the step of passing the liquid upward through a horizontally traveling, bed of an ion exchange resin in a direction essentially perpendicular to the direction of the plane of flow of said traveling bed of ion exchange resin, passing said liquid upward through a distributor means to uniformly distribute the liquid prior to contact with said traveling bed of ion exchange resin, fluidizing the bed of ion exchange resin by passing of the liquid into and through said ion-exchange resin bed, and arranging the distributor and the traveling bed of ion exchange resin within the confines of the same apparatus.

9. The process of Claim 8 wherein said distributor means is selected from (1) a graded bed(s); (2) a perforated pipe(s); (3) a tube bank(s); (4) a perforated plate(s); (5) a screen(s); (6) a tower packing; (7) a channel member(s); (8) a perforated corrugated sheet(s); or (9) any combination thereof.

10. The process of Claim 9 wherein the distributing means is a graded bed of at least one layer of a particulate material and a layer of sand, and wherein said ion exchange resin travels over the layer of sand.

17,888F-F                     -19-

11. The process of Claim 9 including the step of construcing said distributor means of a plurality of adjacent channel members associated with a plurality of opposing channel members, arranging the channel members in a manner which causes the liquid to flow within the confines of said channel members so as to provide a substantially uniform upward flow of the liquid through said bed of ion exchange resin.

12. The process of Claim 9 wherein said distributor means is constructed of a plurality of corrugated sheets which are provided with perforations and which are aligned such that the flow of liquid therethrough is in a tortuous manner.

13. The process of any one of the preceding Claims wherein said ion-exchange resin is a cation exchange resin and said contacting liquid is water.

14. A process of any one of Claims 1 to 5 wherein said ion exchange resin is an absorption, adsorption, coordination, chelating, sequestering or complexing resin or material and said contacting liquid is water containing a material which said ion exchange resin or material is capable of removing.

15. An ion concentrating or removing process wherein a liquid, is treated by contacting the liquid with an ion exchange resin in a continuous manner; characterized by:

    (A) establishing an elongated, continuous, horizontally traveling, bed of ion exchange resin particles;

(B)  passing said liquid through a distributor
     means for uniformly distributing said liquid
     in a manner so as to provide for a continuous
     flow of the liquid upward through said bed of
     ion exchange resin in a direction essentially
     perpendicular to the direction of flow of
     said horizontally traveling bed of ion exchange
     resin; and at a rate sufficient to maintain
     said bed in a fluidized, essentially non-
     -filtering state;

(C)  providing said distributing means as a support
     along which said fluidized bed of ion exchange
     resin moves;

(D)  arranging said distributing means and said
     bed of ion exchange resin being within the
     confines of the same apparatus; and

(E)  feeding said ion exchange resin to one end of
     said apparatus and withdrawing the resin from
     the other end of said apparatus after contact
     with the liquid.

16.  The process of any one of Claims 8 to
15, wherein said liquid contains particulate matter
suspended therein, and wherein said traveling bed of
ion exchange resin is essentially non-filtering.

17.  The process of any one of Claims 8 to
16, wherein said particulate matter is filterable and
has a particle size of less than 0.254 mm (0.01 in).

FIG. I

FIG. 2

FIG. 3

FIG.4

FIG.5

FIG.6

FIG.7

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 770 110 (S.C.I.R.O.)<br><br>* Page 2, lines 100-108; page 3, lines 5-41; page 3, lines 50-54; page 4, lines 39-59; pages 5-6; claims 1-11 * | 1,3,7-9,13-16 | B 01 J 47/10 |
| A | | 2 | |
| | --- | | |
| X | FR-A-1 403 410 (DORR-OLIVER INC.)<br><br>* Page 3, abstract * | 1,3,7-9,13-15 | |
| | --- | | |
| A | GB-A- 885 503 (MINISTER OF AVIATION) | | **TECHNICAL FIELDS SEARCHED (Int. Cl. ³)** |
| | --- | | |
| D,A | US-A-2 671 714 (McILHENNY) | | B 01 J |
| | ----- | | |

The present search report has been drawn up for all claims

| Place of search<br>THE HAGUE | Date of completion of the search<br>15-06-1984 | Examiner<br>WENDLING J.P. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82